# EUROPEAN PATENT APPLICATION

(11) **EP 1 393 931 A1**
(43) Date of publication of application: **03.03.2004**
(21) Application number: 02714474.0
(22) Date of filing: 04.04.2002
(51) Int. Cl.: B60C 15/00, B60C 15/06

(54) **PNEUMATIC TIRE**

(30) Priority: 16.04.2001 JP 2001116460
(71) Applicant: Sumitomo Rubber Industries, Ltd., Kobe-shi, Hyogo 651-0072 (JP)
(72) Inventor: UEYOKO, K., c/o Sumitomo Rubber Industries, Ltd., Kobe-shi, Hyogo 651-0072 (JP)
(74) Representative: Manitz, Finsterwald & Partner GbR
(86) International application number: PCT/JP2002/003407
(87) International publication number: WO 2002/085647

(57) **Abstract**

A carcass 6 includes a carcass cord 6c, a body portion 6a which is astride the bead cores 5 and 5 is integrally provided with a folded-back portion 6b which is folded back from inside to outside in an axial direction of the tire at the bead core 5. In the outer end 6t of the folded-back portion 6b, a ratio (Ta/Tb) of a thickness Ta of a rubber 11 between the plies interposed between the carcass cord 6c of the folded-back portion 6b and the carcass cord 6c of the body portion 6a to a thickness Tb of an outer rubber 12 between the tire outer surface and the carcass cord 6c of the folded-back portion 6b is limited to 0.5 to 1.3.

## Description

### BACKGROUND ART

The present applicant proposes a pneumatic tire capable of enhancing endurance of a bead portion in Japanese Patent No. 3058624. It has been confirmed that this pneumatic tire can largely enhance endurance against mechanical fatigue applied to the bead portion as compared with a conventional technique.

In recent years, recycle of tire proceeds. For example, after a tire is used for two to three years, only a tread rubber is re-upholstered and the tire is reused. Such a tire is called a retreaded tire. Such a retreaded tire is remarkably used as a heavy loaded tire used for a truck or a bus. The retread is carried out not only once, but a plurality of times in some cases. In order to endure such a retread, a portion of a tire body other than the tread rubber, especially a bead portion to which especially great load is intensively applied is required to have a structure capable of enduring a total mileage of hundreds of thousands km, more preferably, about million km.

On the other hand, deterioration of rubber in a tire structure interior proceeds relatively early and endurance of the bead portion is prone to be deteriorated due to influence of vulcanization heat at the time of retread operation of a tread rubber in addition to long-term use in a high temperature area. In order to recycle the tire and to increase a life cycle, it is desired to further enhance the endurance of a tire body, especially a bead portion.

### DISCLOSURE OF THE INVENTION

The present invention has been accomplished in view of the above-mentioned problem, and it is an object of the invention to provide a pneumatic tire, especially a radial tire for heavy load in which a carcass ply comprises a toroidal body portion which is integrally provided with a folded-back portion which is folded back from an axially inner side toward an outer side at a bead core, and in an outer end of the folded-back portion of the carcass ply, a ratio (Ta/Tb) of a thickness Ta of a rubber between plies interposed between the carcass cord of the folded-back portion and the carcass cord of the body portion to a thickness Tb of an outer side rubber between the tire outer surface and the carcass cord of the folded-back portion is limited to a constant range, and based on the above structure, endurance of the bead portion can further be enhanced.

To achieve the above-mentioned object, the present invention provides a pneumatic tire comprising a carcass having a carcass ply in which the carcass ply comprises a body portion extending from the tread portion to a bead core of the bead portion through the sidewall portion, and a folded-back portion which is folded back from an inner side of a tire axial direction toward an outer side thereof at the bead core, and which is integrally provide on the body portion, and in which the carcass cord is inclined at an angle of 70 to 90° with respect to a tire equator, wherein in an outer end of the folded-back portion, a ratio (Ta/Tb) of a thickness Ta of a rubber between plies interposed between the carcass cord of the folded-back portion and the carcass cord of the body portion to a thickness Tb of an outer rubber between an tire outer surface and the carcass cord of the folded-back portion is set to 0.5 to 1.3.

In the pneumatic tire of the invention, it is preferable that the rubber thickness Ta of the rubber between the plies is 4.0 to 8.0 times of a diameter D of the carcass cord.

In the pneumatic tire of the invention, it is preferable that each of the rubber between the plies sandwiching the outer end of the folded-back portion and the outer rubber has 100% modulus of 0.6 to 7.0 MPa except a topping rubber of a carcass cord.

In the pneumatic tire of the invention, it is preferable that the carcass cord of the folded-back portion includes an approaching portion in which a distance (t) between the cords which is a distance between carcass cords of the body portion becomes minimum value (tmin), this minimum value (tmin) is set to 0.15 to 3.9 times of a diameter D of the carcass cord, and a gradually increasing region in which the distance (t) between the cords is gradually increased up to the outer end is provided outside from the approaching portion in the tire radial direction.

In the pneumatic tire of the invention, it is preferable that the outer rubber includes a chafer rubber which extends from the bead portion side and whose outer end in the tire radial direction is terminated inward from the outer end of the folded-back portion, and a sidewall rubber which is connected to the chafer rubber and which extends along the sidewall portion, a length along the folded-back portion between the outer end of the folded-back portion and the outer end of the chafer rubber is 1.0 to 6.0 times of the thickness Tb of the outer rubber, the chafer rubber has 100% modulus of 4.3 to 9.0 MPa, and is made of rubber material having 100% modulus greater than that of the sidewall rubber.

The 100% modulus of each of said rubbers is measured using rubber which is sampled from a new tire in principle.

### BRIEF DESCRIPTION OF THE DRAWINGS

Fig. 1 is a sectional view of of an embodiment of a pneumatic tire of the present invention shown in an unloaded standard state in which the pneumatic tire is assembled to a normal rim and the tire is filled with a normal internal pressure.
Fig. 2 is a sectional view taken along a line A-A in Fig. 1.
Fig. 3 is a partially enlarged view of a bead portion shown in Fig. 1.
Fig. 4 is a partially enlarged view of Fig. 3.
Fig. 5 is a schematic diagram of a cross section of the bead portion showing another embodiment of the invention.

### BEST MODE FOR CARRYING OUT THE INVENTION

An embodiment of the present invention will be explained based on the drawings.

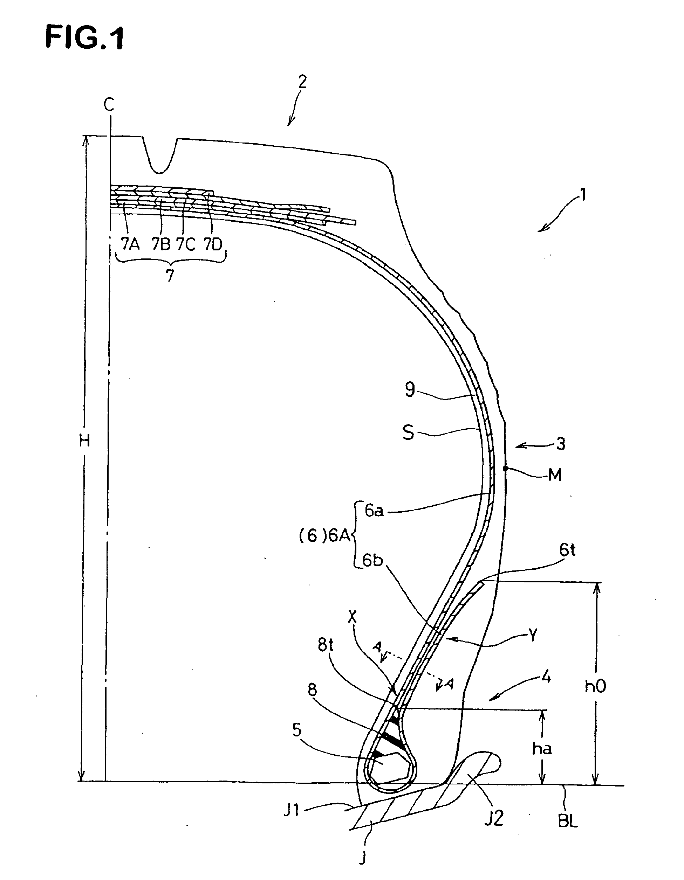

As a pneumatic tire, Fig. 1 shows a tubeless heavy load radial tire 1 (simply "tire 1", hereinafter) used for a truck or a bus. Fig. 1 shows a merdional cross section (right half) in an unloaded standard state in which the tire 1 is mounted to a normal rim J (in this example, 15° taper deep rim) and a normal internal pressure is charged into the tire. A structure in the tire in such a standard state can easily be obtained by , for example, CT scan and the like.

In this specification, the "normal rim" is a rim defined for each tire by spec system including spec on which the tire is based. For example, the normal rim is a standard rim in the case of JATMA, a "Design Rim" in the case of TRA, and a "Measuring Rim" in the case of ETRTO. The "normal internal pressure" is an air pressure defined for each tire by spec system including spec on which the tire is based, and the normal internal pressure is a maximum air pressure in the case of JATMA, a maximum value described in a table "TIRE LOAD LIMITS AT VARIOUS COLD INFLATION PRESSURES" in the case of TRA, and "INFLATION PRESSURE" in the case of ETRTO, but if the tier is for a passenger car, the normal internal pressure is set to 180 kPa uniformly. Unless otherwise specified, size of each portion is measured in this standard state.

In Fig. 1, the tire 1 comprises a tread portion 2, a pair of sidewall portions 3 extending from opposite ends of the tread portion 2 radially inward, and bead portions 4 located at inner ends of the sidewall portions 3 and sitting on the normal rim J. The tire 1 further includes a carcass 6 having one or more carcass plies 6A. The carcass ply 6A comprises a body portion 6a extending from the tread portion 2 to a bead core 5 of the bead portion 4 through the sidewall portion 3, and a folded-back portion 6b which is folded back from an inner side of a tire axial direction toward an outer side thereof at the bead core 5, and which is integrally provided on the body portion 6a.

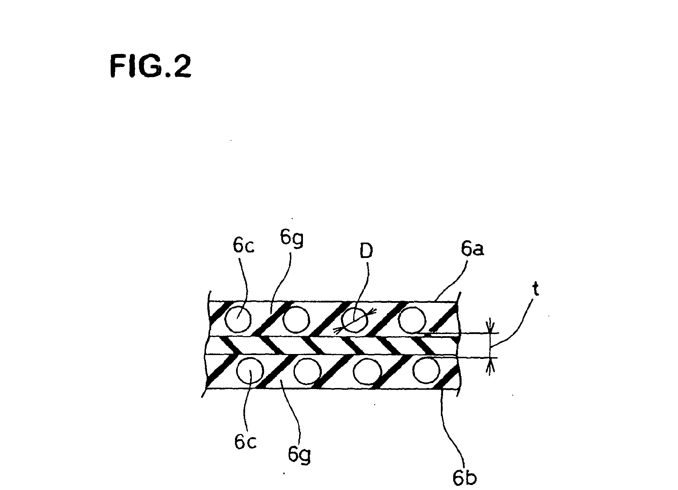

In this example, as shown in Fig. 2 which is a sectional view taken along a line A-A in Fig. 1, in the carcass ply 6A, carcass cords 6c are arranged to form a cord array, and opposite sides of the cord array are coated with thin topping rubbers 6g. The carcass cord 6c is inclined in an angle range of 70 to 90° with respect to a tire equator C. It is preferable that a rubber material, for example, having 100% modulus of 4.5 to 7.5 MPa, more preferably, 5. 0 to 6.0 MPa is used as the topping rubber 6g. The topping rubber 6g used in this embodiment is made of rubber material having greater 100% modulus than that of the conventional technique. If the 100% modulus of the topping rubber 6g is less than 4.5 MPa, modulus is excessively low, and mechanical motion of rubber becomes great in a region where the carcass cords of the body portion 6a and the folded-back portion 6b approach each other, rubber is destroyed due to reduction in rubber strength, ply loose is generated, endurance is prone to be deteriorated. If the 100% modulus of the topping rubber 6g exceeds 7.5 MPa on the contrary, the modulus is excessively high, heat level of the rubber rises, and the topping rubber 6g is prone to be damaged by heat.

A steel cord is employed as the carcass cord 6c in this example. It is also possible to use an organic fiber cord such as nylon, rayon, polyester, aromatic polyamide in accordance with categories of the tire if necessary. The carcass 6 in this embodiment is formed of one carcass ply 6A whose steel cord is inclined at about 90° with respect to the tire equator C.

A belt layer 7 is disposed radially outward of the carcass 6 and inward of the tread portion 2. In this example, the belt layer 7 has four-layered structure in which an innermost belt ply 7A in which steel cords are inclined at an angle of about 60±10° for example with respect to the tire equator C, and belt plies 7B, 7C and 7D in which steel cords are inclined at small angle of 30° or less with respect to the tire equator C are superposed on one another such that one or more portions where the belt cords intersect with each other between the plies are formed. As the belt layer 7, other cord materials such as rayon, nylon, aromatic polyamide, nylon and the like can also be used if necessary.

In the bead portion 4, a bead apex rubber 8 having triangular cross section extending from the bead core 5 radially outward in a taper manner is disposed between the body portion 6a and the folded-back portion 6b. A height of the bead apex rubber 8, i.e., a height ha from a bead base line BL to an outer end 8t of the bead apex rubber 8 is preferably 6 to 31% of a tire cross section height H (shown in Fig. 1), more preferably 8 to 22%, more preferably 8 to 14%, and is set to about 11% in this example. The bead base line BL is a line in the tire axial direction passing through a rim diameter position defined in the spec. The tire cross section height H is a height from the bead base line BL to the outermost position in the tire axial direction in the standard state.

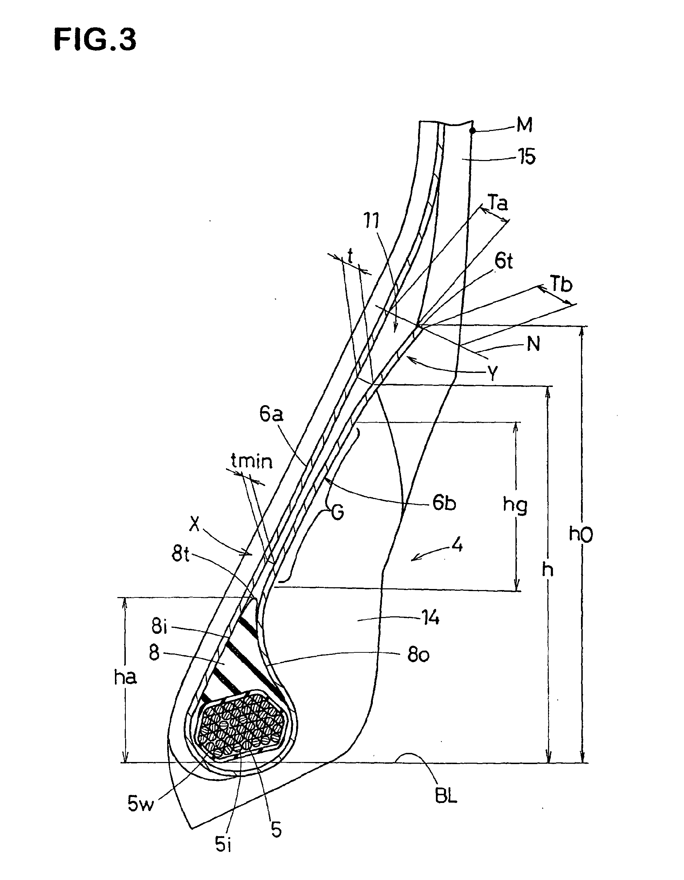

As shown in Fig. 3 in an enlarged manner, the bead apex rubber 8 is formed substantially straightly in which an inner side surface 8i thereof in the tire axial direction is inclined substantially in parallel to the body portion 6a, and an outer side surface 8o in the tire axial direction is formed into an arc which is recessed inward in the tire axial direction. This bead apex rubber 8 is preferably made of rubber material having JISA hardness of 60 to 99°, and 100% modulus of 1. 3 to 11.7 MPa, more preferably 7.0 to 10.0 MPa.

In this example, the bead core 5 is formed by spirally winding a steel wire 5w predetermined times such that its cross section becomes substantially hexagonal shape, and its outer periphery is coated with, for example, a lapping rubber. In the bead core 5, an inner piece 5i which is one side thereof at inner side in the tire radial direction is inclined at about 15° with respect to the tire axial direction, i.e., along the inclination of a rim sheet surface Jl (shown in Fig. 1) of the rim J. In addition to the steel wire, wire material made of aromatic polyamide can also be employed for the bead core 5.

The folded-back portion 6b has an outer end 6t in the tire radial direction. The outer end 6t extends along the outer side surface 8o of the bead apex rubber 8 and beyond the outer end 8t radially outward. In this example, the outer end 6t is located radially inner side than a maximum width point M forming a tire maximum width position. With this design, the outer end 6t is terminated such that a distortion amount when no load is applied becomes relatively small height h0. It is preferable that a height of the folded-back portion 6b, i.e., a height h0 in the tire radial direction from the bead base line BL to the outer end 6t of the folded-back portion is greater than a height ha of the bead apex rubber 8, and is in a range of 15 to 50% of a distance from the bead base line BL to a tire cross section height H, and more preferably 20 to 40%, and in this example, about 32%.

In this example, the folded-back portion 6b includes an approaching portion X in which the folded-back portion 6b and a distance t between the carcass cords 6c and 6c (measured as shown in Fig. 2) becomes minimum value tmin in the vicinity of an outer end 8t of the bead apex rubber 8. The minimum value tmin of the distance between the cords of the approaching portion X is set to 0.15 to 3.9 times of a diameter D of the carcass cord 6c.

In this manner, the distance t between the cords in the vicinity of the outer end 8t of the bead apex rubber 8 is made minimum, and a rubber volume between the body portion 6a and the folded-back portion 6b is reduced. With this design, it is possible to prevent large shear force and heat from being applied to rubber between the plies in the vicinity of the outer end 8t of the bead apex rubber 8, and it is possible to restrain the breaking of the rubber. If the minimum value tmin is smaller than 0.15 times of the diameter D of the carcass cord 6c, a distance between the cords between the body portion 6a and the folded-back portion 6b becomes excessively small, and a strength of rubber against deformation at this portion is prone to be insufficient, and if the minimum value tmin exceeds 3.9 times, heat is excessively generated by shear force acting on the rubber between the plies of the body portion 6a and the folded-back portion 6b, and this portion is prone to be an origin of separation. From this point of view, it is preferable that the minimum value tmin between the cords of the approaching portion X is 0.5 to 3.5 times of the diameter D of the carcass cord 6c, and more preferably, 0.8 to 2.5 times.

It is preferable that the approaching portion X is at least one of 1.1 to 1.5 times of a height ha of the bead apex rubber 8 from the bead base line BL. The approaching portion X may be formed locally for example, but as shown in Fig. 3, it is especially preferable that the distance t between the cords is minimum value tmin and is continuous in the tire radial direction so that a parallel region G in which the body portion 6a and the carcass cords 6c and 6c of the folded-back portion 6b extend substantially in parallel is formed. In this example, a height hg of the parallel region G in the tire radial direction is set to 0.2 times or more, preferably 0.3 times or more of a height h0 of the folded-back portion.

As results of various experiments carried out by the present inventors, it is found that if the parallel region G formed by the approaching portion X is formed, heat based on the shear force acting on this portion can effectively be dispersed, effect for restraining the break of the rubber which is caused near the outer end 8t of the bead apex rubber 8 is further enhanced, and endurance of the bead portion 4 is largely enhanced.

In this example, as shown in Fig. 3, a gradually increasing region Y in which the distance t between the cords between the body portion 6a of the carcass ply and the folded-back portion 6b is gradually increased to the outer end 6t is formed outside the approaching portion X in the tire radial direction (in this example, continuously with the parallel region G). By providing such a gradually increasing region Y, it is possible to increase a thickness of the rubber 11 between the plies interposed between the body portion 6a in the outer end 6t of the folded-back portion 6b with respect to the approaching portion X, and it is possible to restrain the breaking of the rubber at the outer end 6t of the folded-back portion 6b for a long term.

In the bead portion 4 in this example, a range of 0.8 to 1.0 times of the height h0 from the bead base line BL to the outer end 6t of the folded-back portion is formed as the gradually increasing region Y. This gradually increasing region Y is not limited to this range, and the gradually increasing region Y may be formed in at least a portion within this range, e.g., the gradually increasing region Y may be formed in a range from 0.5 to 1.0 times of the height h0 of the outer end 6t of the folded-back portion 6b from the bead base line BL.

In the gradually increasing region Y in this example, a ratio (t/h) of the distance t between the cords at an arbitrary height h from the bead base line BL to this height h is substantially constant. With this design, the thickness of the rubber between the plies can be increased with uniform amount in accordance with the height from the bead base line BL toward the outer end 6t of the folded-back portion 6b, and it is possible to smoothen the rigidity variation.

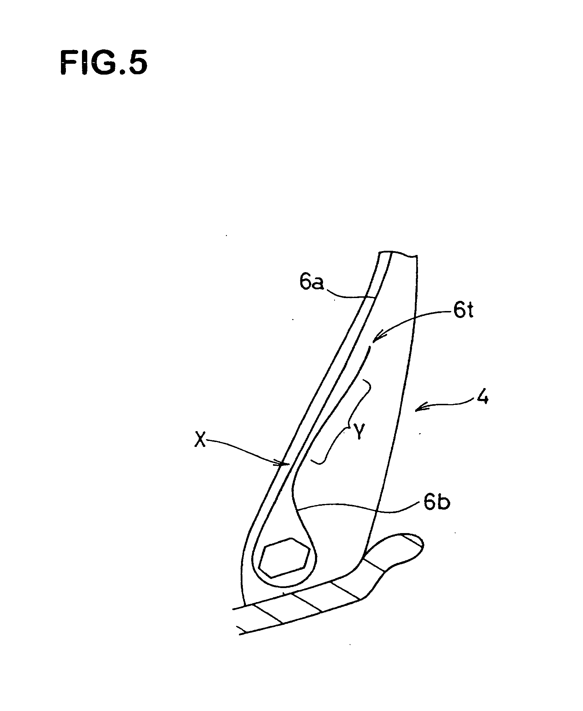

As an example of the "gradually increase", a case in which the distance t between the cords is increased in a linear function manner (t/h is substantially constant) in accordance with the height from the bead base line BL is shown, but any manner in which the distance t between the cords is gradually increased is also included in addition to the above-mentioned case, and for example, a case in which the distance t between the cords is increased in accordance with square of the height h from the bead base line BL (e.g., t/h² = substantially constant) is at least included. In the above-mentioned embodiment, the most preferable mode in which the distance t between the cords is gradually increased to the outer end 6t of the folded-back portion 6b was shown, but as shown in Fig. 5, an example in which after the distance t between the cords is gradually increased, the distance t between the cords becomes constant and reaches the outer end 6t of the folded-back portion, and the gradually increasing region Y is formed at an intermediate portion is also included as a mode of the present invention.

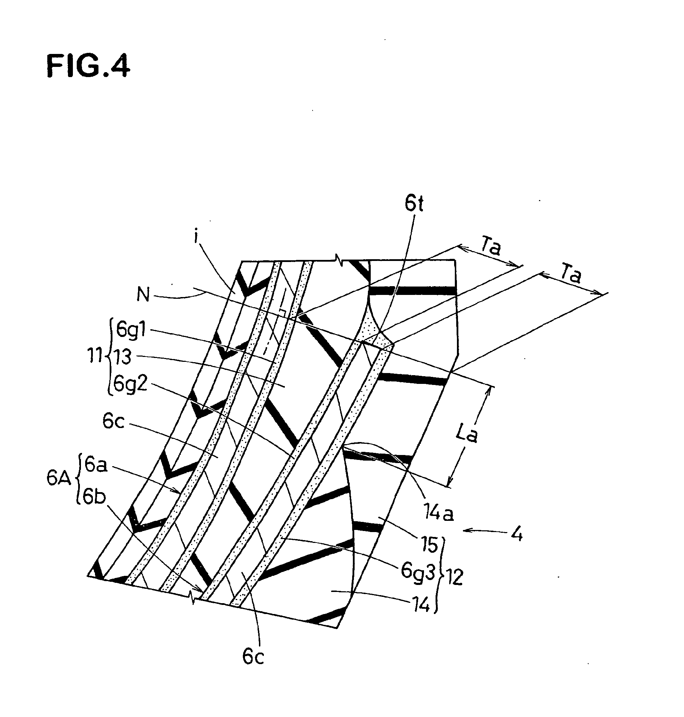

In the present invention, as shown in Figs.3 and 4, in the outer end 6t of the folded-back portion 6b, a ratio (Ta/Tb) of the thickness Ta of the rubber 11 between the plies interposed between the carcass cord 6c of the folded-back portion 6b and the carcass cord 6c of the body portion 6a to the thickness Tb of the outer rubber 12 between the tire outer surface and the carcass cord 6c of the folded-back portion 6b is limited to the range of 0.5 to 1.3. As shown in Fig. 4, the thicknesses Ta and Tb of the rubbers at the outer end 6t of the folded-back portion 6b are measured on a straight line N which passes through the outer end 6t and which is substantially at right angles to the carcass cord 6c of the body portion 6a of the carcass ply 6A.

By limiting the ratio (Ta/Tb) of the thickness Ta of the rubber 11 between the plies and the thickness Tb of the outer rubber 12 as described above, the thicknesses of the rubbers from inner and outer sides in the tire axial direction of the outer end 6t of the folded-back portion 6b can be made substantially equal to each other, the balance of rubber rigidity at inner and outer sides of the outer end 6t of the folded-back portion 6b is optimized, and stress concentration on the outer end 6t is largely moderated. The moderation of stress concentration further enhances the endurance of the bead portion 4.

Here, if the ratio (Ta/Tb) is less than 0.5, when deformation is repeated at the time of loaded running, stress is prone to concentrate on the outer rubber located outside in the tire axial direction of the outer end 6t of the folded-back portion 6b, looseness is prone to be generated from the axially outer portion of the outer end 6t of the folded-back portion 6b, and cracking extending on the tire outer surface in the tire circumferential direction is prone to be generated. On the other hand, if the ratio (Ta/Tb) exceeds 1.3, since distortion and heat in the outer end 6t of the folded-back portion 6b and the rubber 11 between the plies become great, looseness is prone to be generated between the body portion 6a and the folded-back portion 6b. From such a view point, it is especially preferable that the ratio (Ta/Tb) is set to 0.7 to 1.2, more preferably, 0.8 to 1.1.

Even if the thickness Ta of the rubber 11 between the plies satisfies the above-mentioned ratio, if an absolute size is too small, the shear force between the folded-back portion 6b and the body portion 6a can not be moderated, and if the thickness Ta is excessively large on the contrary, there is inconvenience that high heat is generated. From such a view point, it is preferable that the thickness Ta of the rubber 11 between the plies is 4.0 to 8.0 times of the diameter D of the carcass cord 6c, more preferably, 4.0 to 7.0 times and more preferably, 4.0 to 6.0 times.

In order to further enhance the endurance of the bead portion 4, in the rubber 11 between the plies sandwiching the outer end 6t of the folded-back portion 6b and the outer rubber 12, it is preferable that the 100% modulus is set to 0.6 to 7.0 MPa, more preferably, 0.6 to 2.6 MPa except the topping rubber 6g of the carcass cord 6c. The rubber 11 between the plies sandwiching the outer end 6t of the folded-back portion 6b and the outer rubber 12 are specified by a portion which intersects with the straight line N, and 100% modulus of each of the rubber 11 between the plies and outer rubber 12 located on the straight line N is set to the above-mentioned range.

As shown in Fig. 4 in an enlarged manner, in this example, the rubber 11 between the plies comprises a topping rubber 6g1 covering outside the carcass cord 6c of the body portion 6a, a topping rubber 6g2 covering inside the carcass cord 6c of the folded-back portion 6b, and a packing rubber 13 sandwiched therebetween. Here, 100% modulus of the packing rubber is set to the above-mentioned range of 0.6 to 7.0 MPa, more preferably 0.6 to 2.6 MPa. The outer rubber 12 in this example comprises a topping rubber 6g3 covering outside the folded-back portion 6b, a chafer rubber 14 extending from the bead portion side and having an outer end 14a in the tire radial direction which is terminated radially inner side than the outer end 6t of the folded-back portion 6b, and a sidewall rubber 15 connected to the chafer rubber 14 and extending along the sidewall portion 3. In this example, the sidewall rubber 15 sandwiching the outer end 6t of the folded-back portion 6b from outside in the tire axial direction, and 100% modulus of the sidewall rubber 15 is set to the above range of 0.6 to 7.0 MPa, more preferably 0.6 to 2.6MPa.

In this manner, in each of the rubber 11 between the plies and the outer rubber 12 sandwiching the outer end 6t of the folded-back portion 6b from inside and outer of the tire axial direction, 100% modulus thereof is set to a smaller value than that of the conventional technique as small as 0.6 to 7.0 MPa except the topping rubber. With this design, it becomes easy for the rubber 11 between the plies and the outer rubber 12 to follow a dynamic motion of the outer end 6t of the folded-back portion 6b at the time of loaded running, and it is possible to more effectively moderate the stress concentration on the outer end 6t. To moderate the stress concentration, it is preferable that the 100% modulus is set to 2.6 MPa or less, more preferably 2.0 MPa or less, and further preferably 1.5 MPa or less.

Here, if the 100% modulus of the packing rubber 13 and sidewall rubber 15 is less than 0.6 MPa, the elasticity of each rubber is excessively lowered, the reinforcing effect of the bead portion 4 is lowered, the following performance of the folded-back portion 6b to the outer end 6t is deteriorated, and the looseness is prone to be generated. On the contrary, if the 100% modulus of the packing rubber 13 and sidewall rubber 15 exceeds 7.0 MPa, the elasticity of each rubber is excessively increased and the rubber becomes hard, the following performance of the folded-back portion 6b to the outer end 6t is deteriorated, and the looseness of plies is prone to be generated also. From such a view point, it is especially preferable that in each of the rubber 11 between the plies and the outer rubber 12 sandwiching the outer end 6t of the folded-back portion 6b from inside and outer of the tire axial direction, 100% modulus thereof except the topping rubber is set to 0.6 to 2.6 MPa, 0.8 to 2.0 MPa and more preferably 0.9 to 1.5 MPa.

Since the chafer rubber 14 comes into contact with a rim flange J2, the chafer rubber 14 maintains the endurance against deformation and slide with the rim flange J2 at the time of rolling, and is largely concerned in endurance of the bead portion 4. Therefore, in this example, 100% modulus of the chafer rubber 14 is set to 4.3 to 9.0 MPa, more preferably 4.6 to 8.5 MPa, further preferably 4.8 to 8.0 MPa, and is set to a value greater than that of the sidewall rubber. If the 100% modulus of the chafer rubber is less than 4.3 MPa, rigidity around the bead portion is extremely lowered, and if the deformation amount of the bead portion at the time of rolling is increased, this may increase heat and inner distortion, and endurance is prone to be deteriorated.

In such a case, a reinforcing cord layer (not shown) can be added to the bead portion 4, but this increases a weight of the tire, and steering performance of the tire and fuel economy of a vehicle are deteriorated and thus, this is not preferable. That is, like the pneumatic tire 1 of this embodiment, the bead portion 4 which is not provided with a reinforcing cord layer other than carcass ply is preferable. However, the bead portion 4 can be provided with a cord reinforcing layer in a range not departing from a subject matter of the present invention.

If the 100% modulus of the chafer rubber 14 exceeds 9.0 MPa, the rigidity around the bead portion is excessively increased, the elasticity becomes too high with respect to deformation of the bead'portion 4 at the time of rolling, internal heat of the chafer rubber 14 is increased, the reinforcing effect by the chafer rubber 14 is lowered, cracking and wear caused by rubbing with the rim flange J2 proceed, and crack reaching the inside of the tire is prone to be generated.

The chafer rubber 14 comprises a rubber having high elasticity as described above. If the outer end 14a of the chafer rubber 14 having such a high elasticity is located near the outer end 6t of the folded-back portion 6b, or the outer end 14a is located beyond the outer end 6t of the folded-back portion 6b in the tire radial direction, the rigidity of the outside portion of the outer end 6t of the folded-back portion 6b in the tire axial direction is excessively increased, there is an adverse possibility that the thicknesses Ta and Tb of the rubber 11 between the plies and the outer rubber 12, and the rubbers for moderating the stress concentration by limiting the 100% modulus of the rubbers are out of balance. Thereupon, in this example, in order to further enhance the endurance of the bead portion 4, the outer end 14a of the chafer rubber 14 is terminated at inner end in the tire radial direction than the outer end 6t of the folded-back portion 6b, and a length La along the folded-back portion 6b between the outer end 6t of the folded-back portion 6b and the outer end of the chafer rubber is set to 1.0 times or greater of the thickness Tb of the outer rubber. However, if the length La is excessively long, the rigidity around the bead portion can not be maintained. Therefore, it is preferable that the upper limit of the length La is set to 6.0 times or less of the thickness Tb of the outer rubber and more preferably, 5.0 times or less.

Although the present invention has been described above, in the invention, categories of the tire are not limited to the above-mentioned example, and the invention can be applied to tires in various categories such as a passenger car, a small truck, a motorcycle and the like. Although the tubeless pneumatic tire has been indicated, the invention can likewise be applied to a tube pneumatic tire.

### Concrete Example

Tubeless type heavy load radial tires having the basic structure shown in Fig. 1 and tire size of 11R22.5(14PR) were prototyped, and endurance test, internal damage check were carried out. The endurance test was carried out in such a manner that the prototype tire was assembled to a rim having rim size of 8.25x22.5, an internal pressure is charged into the tire at 1000 kPa, and the tire was allowed to run through 10000 km on a drum of a drum tester at a speed of 20 km/H, under a load of 88.3 kN. Numeric values in ( ) are indices of running time while indicating the finished time as being 100. The higher the numerical value, more excellent the result is. The internal damage check was carried out in such a manner that the tire which ran the whole distance was equally divided into six in the circumferential direction, the number of loosenesses generated in the bead portion and length of the looseness were checked, and they were indicated as indices. A tire having no internal damage was indicated with 100. The higher the numerical value, more excellent the result is.

Spec of the tire is as follows:

### <carcass>

· the number of plies: 1
· cord: steel (3×0.17 mm+7×0.20 mm)
   diameter D: 0.9 mm
· the number of cord implantations: 40/5 cm(inner side of bead core)
· cord angle: 90° (with respect to tire equator)

### <belt layer>

· the number of plies: 4
· cord: steel (3×0.20 mm+6×0.35 mm)
· the number of cord implantations: 26/5 cm
· cord angle: +67, +18, -18, -18(unit: °)
   (with respect to tire equator)

Results of the tests are shown in Tables 1 and 2.

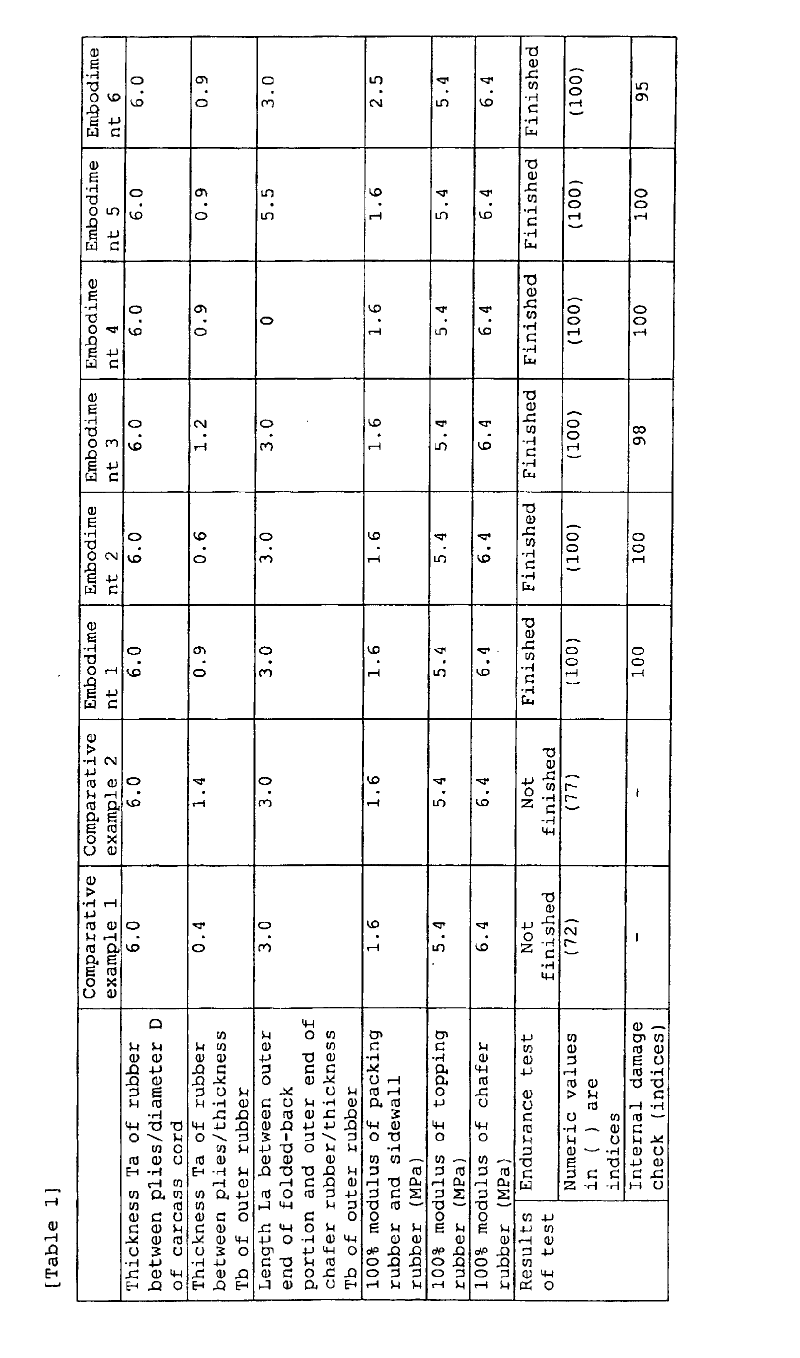

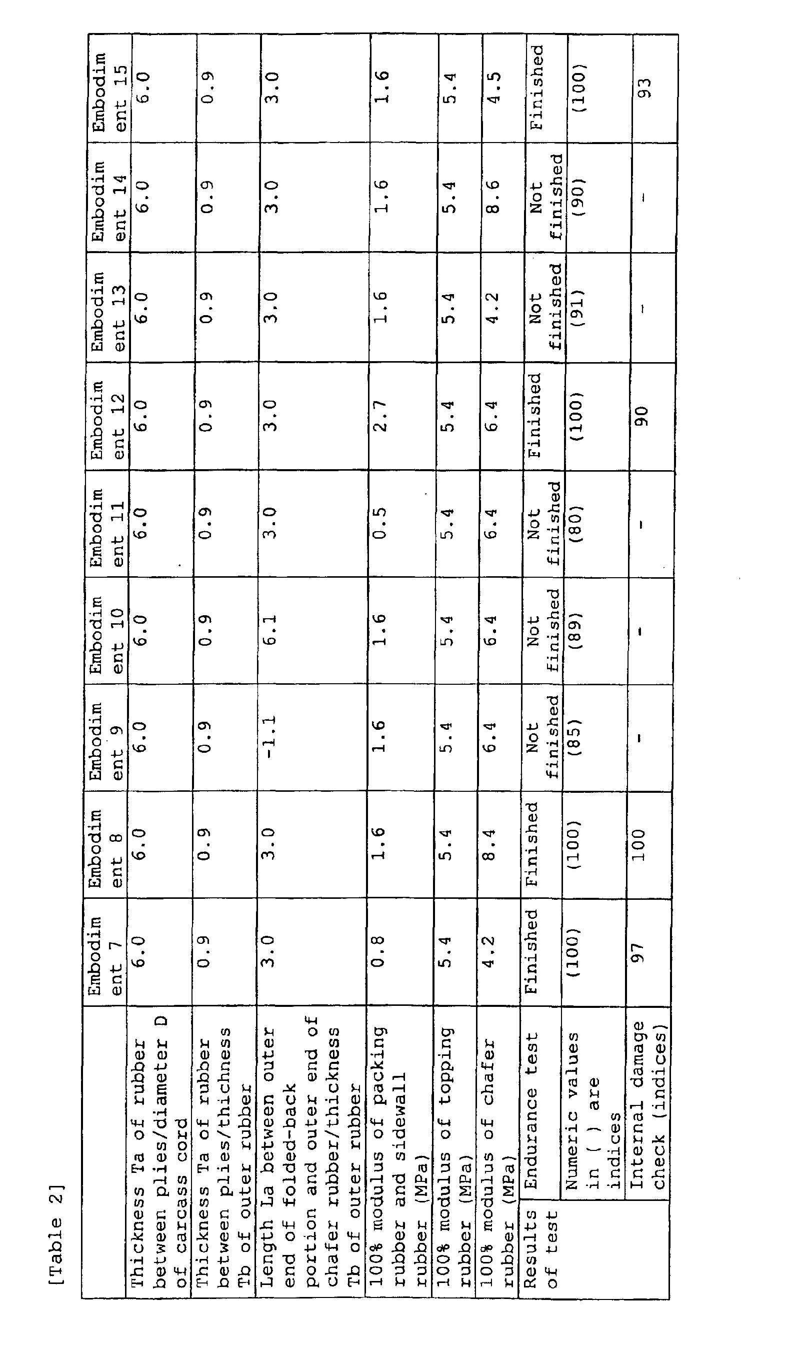

### INDUSTRIAL APPLICABILITY

As described above, according to a pneumatic tire of the present invention, it is possible to further enhance the endurance of the bead portion, and the invention can preferably be applied to a heavy load tire especially having a large number of retreaded times.

## Claims

1. A pneumatic tire comprising a carcass having a carcass ply in which said carcass ply comprises a body portion extending from the tread portion to a bead core of the bead portion through said sidewall portion, and a folded-back portion which is folded back from an inner side of a tire axial direction toward an outer side thereof at said bead core, and which is integrally provided on said body portion, and in which said carcass cord is inclined at an angle of 70 to 90° with respect to a tire equator, wherein
in an outer end of said folded-back portion, a ratio (Ta/Tb) of a thickness Ta of a rubber between plies interposed between said carcass cord of said folded-back portion and said carcass cord of said body portion to a thickness Tb of an outer rubber between an tire outer surface and said carcass cord of said folded-back portion is set to 0.5 to 1.3.

2. A pneumatic tire according to claim 1, wherein said rubber thickness Ta of said rubber between the plies is 4.0 to 8.0 times of a diameter D of said carcass cord.

3. A pneumatic tire according to claim 1 or 2, wherein each of said rubber between the plies sandwiching the outer end of said folded-back portion and said outer rubber has 100% modulus of 0.6 to 7.0 MPa except a topping rubber of'a carcass cord.

4. A pneumatic tire according to any of claims 1 to 3, wherein said carcass cord of said folded-back portion includes an approaching portion in which a distance (t) between the cords which is a distance between carcass cords of said body portion becomes minimum value (tmin),
this minimum value (tmin) is set to 0.15 to 3.9 times of a diameter D of said carcass cord, and a gradually increasing region in which said distance (t) between the cords is gradually increased up to said outer end is provided outside from said approaching portion in the tire radial direction.

5. A pneumatic tire according to any one of claims 1 to 4, wherein said outer rubber includes a chafer rubber which extends from the bead portion side and whose outer end in the tire radial direction is terminated inward from the outer end of said folded-back portion, and a sidewall rubber which is connected to said chafer rubber and which extends along the sidewall portion,
a length along said folded-back portion between the outer end of said folded-back portion and the outer end of said chafer rubber is 1.0 to 6.0 times of the thickness Tb of said outer rubber,
said chafer rubber has 100% modulus of 4.3 to 9.0 MPa, and is made of rubber material having 100% modulus greater than that of said sidewall rubber.
